# FASCICULE DE BREVET EUROPEEN

(11) **EP 2 576 318 B1**
(45) Date de publication et mention de la délivrance du brevet: **14.10.2015**
(21) Numéro de dépôt: 10733021.9
(22) Date de dépôt: 28.05.2010
(51) Int. Cl.: B62B 9/08, B62B 5/04

(54) **SYSTEME DE FREINAGE POUR POUSSETTE**
BREMSSYSTEM FÜR EINEN KINDERWAGEN
STROLLER BRAKING SYSTEM

(43) Date de publication de la demande: 10.04.2013
(73) Titulaire: BABYZEN, 13770 Venelles (FR)
(72) Inventeur: HENRY, Gilles, 92100 Boulogne-Billancourt (FR)
(74) Mandataire: Osha Liang
(86) Numéro de dépôt international: PCT/FR2010/000403
(87) Numéro de publication internationale: WO 2011/148062

(56) Documents cités:
- GB-A- 2 254 118
- GB-A- 2 283 791
- GB-A- 2 351 131
- US-A1- 2008 073 878

## Description

### DOMAINE TECHNIQUE DE L'INVENTION

L'invention se rapporte aux systèmes de freinage et aux poussettes pour enfant équipées de tels systèmes.

### ETAT DE LA TECHNIQUE ANTERIEURE

Les poussettes comprennent généralement une ou deux jambes avant et deux jambes arrière équipées de roues. Pour répondre aux exigences de sécurité, un système de freinage adapté aux poussettes pour enfant doit agir sur les deux roues arrière simultanément, et doit pouvoir être activé ou désactivé sur ces deux roues par une seule opération.

Dans l'art antérieur, il existe de nombreux systèmes de freinage pour poussette. Toutefois, les solutions de l'art antérieur ne sont pas pleinement satisfaisantes.

En effet, certains systèmes de freinage reposent sur des systèmes mécaniques complexes, comprenant de nombreuses pièces ainsi que des ressorts de rappel. Un tel système de freinage est par exemple décrit dans le document US 5 373 917.

D'autres systèmes comprennent deux pédales, fixées à proximité de l'axe A des roues arrière, et munies d'ergots destinés à empêcher la rotation des roues lorsque lesdites pédales sont pivotées vers le bas. Toutefois, de tels systèmes sont peu commodes, car les éléments de blocage sont mis en oeuvre par rotation à l'intérieur des crans des roues, et les pédales sont malaisées à relever pour libérer le système de freinage, car situées relativement près du sol et à proximité de l'axe de rotation des roues. Un tel système de freinage est par exemple décrit dans le document US 5 765 665.

D'autres systèmes encore comprennent un câble, permettant d'interconnecter et d'opérer simultanément les éléments de blocage agissant sur chacune des deux roues arrière. Toutefois, les dispositifs de freinage à câble sont complexes à monter et posent des problèmes de fiabilité. Un exemple de tel système est décrit dans le document GB 2 351 131 qui décrit un système de freinage selon le préambule de la revendication 1.

Enfin, d'autres systèmes de freinage (voir par exemple le document DE 4 226 090) comprennent une ou plusieurs pédales ou barres transversales, situées entre les deux roues arrière. Toutefois, l'encombrement des pédales ou barres transversales disposées entre les deux roues arrière empêchent les utilisateurs de prendre appui sur la barre de liaison entre ces roues, par exemple pour soulever la poussette au passage d'un obstacle.

### EXPOSE DE L'INVENTION

L'invention a pour but de remédier à ces inconvénients en proposant un système de freinage fiable, robuste, peu encombrant, nécessitant un nombre limité de pièces, sans ressort ni câble et qui soit simple d'utilisation.

Pour ce faire, l'invention concerne selon un premier aspect, un système de freinage pour poussette présentant au moins une première et une seconde jambes arrière munies chacune d'au moins une roue, ledit système comportant :
- un premier et un second éléments de blocage montés coulissants, respectivement sur la première et la seconde jambes, entre une position de blocage de roue et une position de libération ;
- un élément d'actionnement monté mobile sur la première jambe entre une position haute et une position basse et coopérant avec le premier élément de blocage de telle sorte que le mouvement dudit élément d'actionnement de sa position haute vers sa position basse déplace le premier élément de blocage de sa position de libération vers sa position de blocage, et qu'à l'inverse le mouvement dudit élément d'actionnement de sa position basse vers sa position haute déplace le premier élément de blocage de sa position de blocage vers sa position de libération ; et
- des moyens de transmission du mouvement agencés pour entraîner simultanément le second élément de blocage vers sa position de blocage lors du mouvement du premier élément de blocage vers sa position de blocage et entraîner simultanément le second élément de blocage vers sa position de libération lors du mouvement du premier élément de blocage vers sa position de libération ; lesdits moyens de transmission du mouvement comportant un arbre mobile en rotation et des organes de transmission du mouvement, portés par les éléments de blocage, en prise avec ledit arbre mobile en rotation.

Ainsi, le système de freinage est relativement simple puisqu'il n'utilise qu'un nombre restreint de pièces, et ne nécessite pas de câble ni de moyens de rappel puisque la transmission est effectuée au moyen d'un arbre rigide en torsion qui coopère directement avec les éléments de blocage de sorte à les entraîner simultanément vers leur position de libération ou vers leur position de blocage de roue.

De plus, le moyen d'actionnement est monté sur une jambe arrière de sorte que sa disposition n'empêche pas de prendre appui sur une barre de liaison connectant les deux jambes arrière.

Enfin, les opérations de verrouillage ou de déverrouillage du système de freinage sont simples puisque l'élément d'actionnement peut être fixé suffisamment haut sur la jambe arrière afin d'être facilement accessible, notamment pour le relever lors de la libération du système de freinage.

En outre, l'utilisation d'un élément de blocage coulissant coopérant avec l'élément d'actionnement permet de positionner l'élément d'actionnement à une distance plus importante du sol et de l'axe de rotation des roues, ce qui facilite son usage.

Dans un mode de réalisation de l'invention, le système comporte un second élément d'actionnement monté mobile sur la seconde jambe entre une position haute et une position basse et coopérant avec le second élément de blocage de telle sorte que le mouvement dudit second élément d'actionnement de sa position haute vers sa position basse déplace le second élément de blocage de sa position de blocage vers sa position de libération, lesdits moyens de transmission du mouvement étant agencés pour entraîner simultanément le premier élément de blocage vers sa position de libération lors du mouvement du second élément de blocage vers sa position de libération.

Ainsi, ce mode de réalisation est particulièrement simple d'utilisation puisqu'il suffit d'exercer une pression de haut en bas sur premier élément d'actionnement pour verrouiller le système de freinage et d'exercer une pression de haut en bas sur le second élément d'actionnement pour déverrouiller le système de freinage.

Avantageusement, les premier et second éléments d'actionnement coopèrent de manière réversible respectivement avec le premier et le second élément de blocage de telle sorte que le mouvement du premier élément de blocage vers sa position de libération entraîne le mouvement du premier élément d'actionnement vers sa position haute et que le mouvement du second élément de blocage vers sa position de blocage de roue entraîne le mouvement du second élément d'actionnement vers sa position haute.

Dans un second mode de réalisation, le système de freinage ne comporte qu'un unique élément d'actionnement. Aussi, ce mode de réalisation ne comporte qu'un nombre restreint de pièces.

Dans ces deux modes de réalisation, la chaîne cinématique de transmission du mouvement est donc complètement réversible, ce qui permet notamment de se passer de moyen de rappel.

Avantageusement, les organes de transmission du mouvement sont des crémaillères coopérant avec un embout dentelé solidaire de l'arbre.

Avantageusement, les éléments de blocage sont montés coulissants à l'intérieur des jambes arrière. Ainsi, le système de freinage est intégré de manière satisfaisante à la poussette.

Dans un mode de réalisation, l'élément d'actionnement est monté en rotation sur la première jambe et porte un pion mobile dans un alésage formé dans le premier élément de blocage.

Dans un autre mode de réalisation, l'élément d'actionnement est monté en rotation sur la première jambe et comporte un alésage coopérant avec un pion situé sur le premier élément de blocage.

Par conséquent la transmission du mouvement entre l'élément d'actionnement et le premier élément de blocage est simple et réversible.

Avantageusement, les roues sont chacune équipées d'une jante crantée et les éléments de blocage comportent chacun un doigt agencé pour s'engager dans un cran de la jante crantée de sorte à bloquer la rotation de la roue, lorsque l'élément de blocage est dans sa position de blocage. Ainsi, les éléments de blocage sont simples et assurent de manière fiable un blocage en rotation des roues arrière.

Avantageusement, les éléments de blocage sont mobiles du bas vers le haut lors de leur mouvement vers leur position de blocage de roue, les doigts des éléments de blocage venant, en position de blocage, s'engager dans un cran de la jante crantée.

Avantageusement, l'arbre mobile en rotation est positionné à l'intérieur d'une traverse connectant la première et la seconde jambes arrière. Ainsi, l'arbre de transmission est caché et protégé de toute détérioration lors de la manipulation de la poussette.

Avantageusement, le premier et le second éléments de blocage sont des pièces identiques, ce qui permet notamment de diminuer les coûts de production du système de freinage et de faciliter son montage.

Selon un deuxième aspect, l'invention concerne une poussette équipée d'un système de verrouillage selon le premier aspect de l'invention.

### BREVE DESCRIPTION DES FIGURES

D'autres caractéristiques et avantages de l'invention ressortiront à la lecture de la description qui suit, en référence aux figures annexées, dans lesquels:
- les figures 1 a et 1 b sont des vues en perspective arrière du train arrière d'une poussette, équipé d'un système de freinage selon un premier mode de réalisation de l'invention, respectivement en position de libération et en position de blocage des roues;
- la figure 2 est une vue éclatée d'un système de freinage pour poussette selon l'invention ;
- les figures 3a et 3b sont des vues en coupe latérale du premier moyen d'actionnement ou pédale de verrouillage et du premier élément de blocage respectivement en position de libération et en position de blocage de roue ;
- les figures 4a et 4b sont des vues en coupe latérale du second moyen de d'actionnement ou pédale de déverrouillage et du second élément de blocage respectivement en position de libération et en position de blocage de roue ; et
- la figure 5 est une vue du système de freinage à la jonction entre la traverse connectant les jambes arrière et un bloc de liaison formant l'extrémité inférieure d'une jambe arrière ; et
- les figures 6a et 6b sont des vues en perspective arrière du train arrière d'une poussette, équipé d'un système de freinage selon un deuxième mode de réalisation de l'invention, respectivement en position de libération et en position de blocage des roues.

Pour plus de clarté, les éléments identiques ou similaires sont repérés par des signes de référence identiques sur l'ensemble des figures.

### DESCRIPTION DETAILLEE D'UN MODE DE REALISATION

Une poussette pour enfant comporte généralement, un train de roue avant composé d'une ou deux jambes avant équipées de roues et un train de roue arrière composés de deux jambes 1,1' chacune équipées d'au moins une roue 2, 2'.

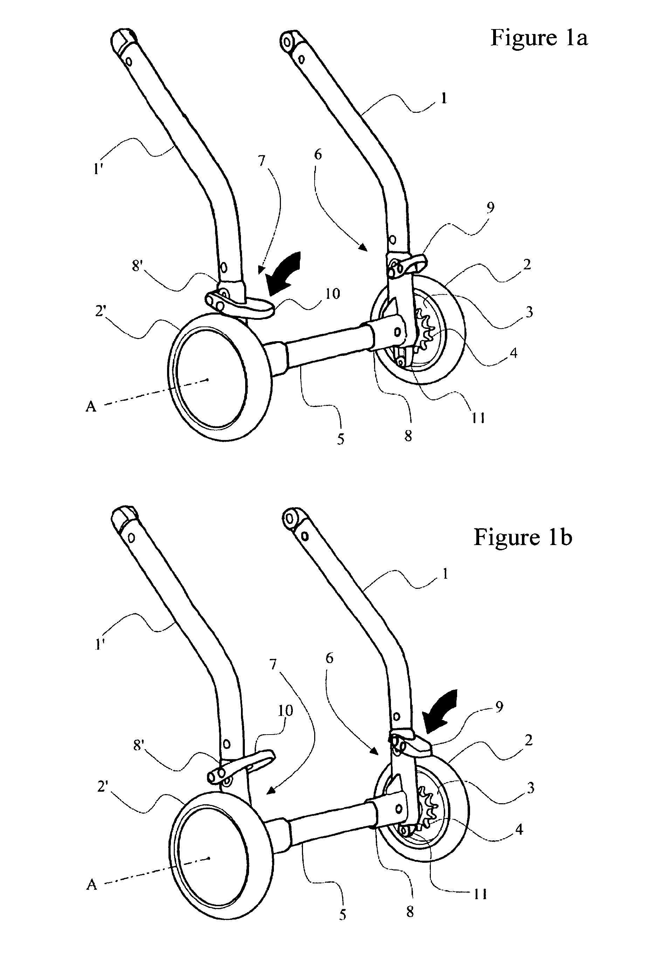

Les figures 1 a et 1 b illustrent le fonctionnement général d'un système de freinage selon un premier mode de réalisation de l'invention et représentent le train arrière d'une poussette pour enfant, équipée d'un tel système, vu en perspective arrière.

Le train arrière de la poussette comporte une jambe arrière droite 1 et une jambe arrière gauche 1'. Chacune des jambes arrière 1, 1' est équipée d'une roue 2, 2' mobile en rotation selon l'axe A. Les roues 2, 2' sont chacune équipées d'une jante crantée 3, 3' destinée à coopérer avec un élément de blocage 11, 11', lorsque celui-ci est en position blocage, de sorte à empêcher la roue 2, 2' de tourner.

Dans le mode de réalisation représenté, les jambes arrière 1, 1' comportent à leur extrémité inférieure des pièces de liaison 8, 8' présentant globalement la forme d'une équerre dont une première branche s'étend dans le prolongement de la partie inférieure de la jambe 1, 1' et dont la seconde branche s'étend horizontalement, transversalement à la poussette.

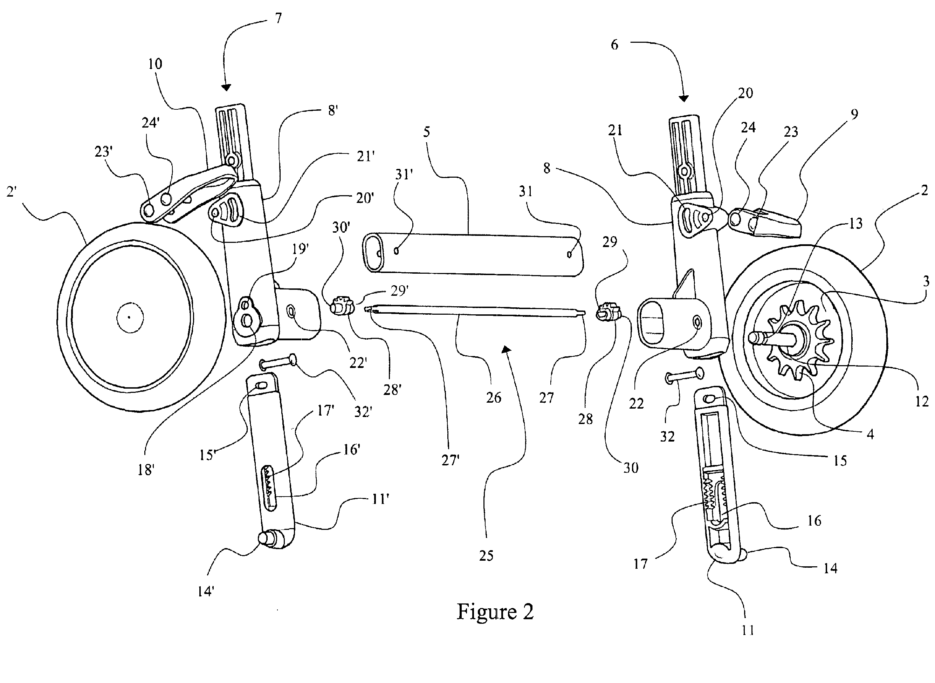

Une traverse 5 s'étend entre les deux jambes arrière 1, 1', au niveau des roues 2, 2' afin de renforcer la rigidité de la poussette. Les extrémités de la traverse 5 sont logées et fixées à l'intérieur de la seconde branche des pièces de liaison 8, 8'. Pour ce faire, la traverse 5 est par exemple percée de trous 31, 31', permettant de fixer la traverse 5 sur chacun des blocs de liaison 8, 8', au moyen de rivets 32, 32' traversant d'une part chaque trou de rivetage 22, 22' des blocs de liaison 8, 8', et d'autre part les trous 31, 31' (voir figure 2).

Le système de freinage comporte un premier 9 et un second 10 éléments d'actionnement montés respectivement sur la première 1 et la seconde 1' jambes arrière. Le premier élément d'actionnement 9, également désigné par pédale de verrouillage, coopère avec le premier élément de blocage 11 pour le déplacer de sa position de libération vers sa position de blocage. Le second élément d'actionnement 10, également désigné par pédale de déverrouillage, coopère avec le second élément de blocage 11' pour le déplacer de sa position de blocage vers sa position de libération.

Les éléments d'actionnement 9, 10 sont mobiles entre une position haute et une position basse. Lorsque le système de freinage selon l'invention est en position de libération (figure 1a), le premier élément d'actionnement 9 ou pédale de verrouillage, est en position haute et le second élément d'actionnement 10 ou pédale de déverrouillage est en position basse.

Pour entraîner le système de freinage de sa position de libération, illustrée sur la figure 1 a vers sa position de blocage de roues 2, 2', illustrée sur la figure 1 b, l'utilisateur exerce, avec le pied par exemple, une pression verticale de haut en bas sur la pédale de verrouillage 9 (voir flèche, figure 1 b). Au contraire, pour entraîner le système de freinage de sa position de blocage de roues vers sa position de libération, l'utilisateur exerce une pression verticale de haut en bas sur la pédale de déverrouillage 10.

Afin de faciliter la distinction entre le premier 9 et le second 10 éléments d'actionnement, les deux éléments d'actionnement pourront notamment présenter des couleurs différentes.

La figure 2 illustre, en vue éclatée, l'ensemble des éléments du système de freinage selon le mode de réalisation représenté.

Le système de freinage comporte un premier 11 et un second 11' éléments de blocage montés mobiles, respectivement sur la première 1 et la seconde 1' jambes, entre une position de blocage de roue et une position de libération. Les éléments de blocage 11, 11' sont montés coulissants verticalement par rapport aux jambes arrière 1, 1'. De préférence, les blocs de liaison 8, 8' sont des pièces moulées creuses formant la partie inférieure des jambes arrière 1, 1' à l'intérieur desquelles les éléments de blocage 11, 11' sont montés coulissants. Les blocs de liaison 8, 8' selon l'invention sont de préférence identiques.

Les éléments de blocage 11, 11' comportent un doigt de verrouillage 14, 14' qui est agencé pour s'engager dans un cran 4, 4' de la jante crantée 3, 3' de sorte à bloquer la rotation de la roue, lorsque l'élément de blocage 11, 11' est dans sa position de blocage. Les doigts de verrouillage 14, 14' sont formés à l'extrémité inférieure des éléments de blocage 11, 11' et font saillies sensiblement horizontalement, vers l'extérieur. Les crans 4, 4' de la jante crantée 3, 3' sont disposés radialement autour de l'axe A des roues 2, 2'. Les éléments de blocage 11, 11' sont mobiles du bas vers le haut lors de leur mouvement de leur position de libération vers leur position de blocage de roues, suivant un axe passant par celui des roues 2, 2' et perpendiculaire à ce dernier. Ainsi, les doigts 14, 14' des éléments de blocage 11, 11' se déplacent radialement par rapport à l'axe A des roues 2, 2' et viennent, en position de blocage, s'ajuster dans l'un des crans 4, 4'.

Dans un autre mode de réalisation de l'invention non représenté, on obtiendra les mêmes effets en disposant les doigts de verrouillage 14, 14' sur une portion intermédiaire des éléments de blocage 11, 11' située au-dessus de l'axe A des roues 2, 2', et les crans 4, 4' à la périphérie de la jante 3, 3' des roues 2, 2'.

De manière alternative, dans un autre mode de réalisation de l'invention, on pourra également prévoir que les éléments de blocage 11, 11 soient mobiles du haut vers le bas lors de leur mouvement de leur position de libération vers leur position de blocage , soit en maintenant les doigts de verrouillage 14, 14' à l'extrémité inférieure des éléments de blocage 11, 11' avec des crans 4, 4' disposés à la périphérie de la jante 3, 3', soit à l'inverse en disposant les doigts de verrouillage 14, 14" sur une portion intermédiaire des éléments de blocage 11, 11' avec des crans 4, 4' disposés autour de l'axe A de la roue 2, 2'. Toutefois, le mode de réalisation représenté sera préféré puisque, dans ce cas, les éléments de blocage 11, 11' ne peuvent se déplacer vers leur position de blocage de roues, de manière indésirable, sous l'effet de la gravité lors du déplacement de la poussette.

Avantageusement, selon l'invention, les éléments de blocage 11, 11' sont des pièces identiques, pouvant être utilisées indifféremment comme premier ou second élément de blocage 11, 11'.

Les éléments de blocage 11, 11' sont connectés par des moyens de transmission du mouvement qui sont agencés pour entraîner simultanément le second élément de blocage 11' vers sa position de blocage lors du mouvement du premier élément de blocage 11 vers sa position de blocage et entraîner simultanément le premier élément de blocage 11 vers sa position de libération lors du mouvement du second élément de blocage 11' vers sa position de libération. Ainsi, le système de freinage selon l'invention est adapté aux exigences de sécurité relatives aux poussettes puisqu'il permet de bloquer simultanément les deux roues 2, 2'.

Pour ce faire, les moyens de transmission 25 du mouvement comportent un arbre 26 mobile en rotation et des organes de transmission 17, 17' du mouvement, portés par les éléments de blocage 11, 11', en prise avec ledit arbre 26.

L'arbre 26 est un arbre rigide en torsion dont les extrémités sont montées en rotation sur les jambes arrière 1, 1'. L'arbre 26 s'étend sensiblement parallèlement aux axes A de rotation des roues 2, 2'. L'arbre 26 est équipé à chacune de ses extrémités d'un embout dentelé 28, 28' fixé audit arbre 26. Pour ce faire, chacune des extrémités 27, 27' de l'arbre 26 s'emboîte dans un logement 29, 29' de l'embout 28, 28', de forme complémentaire auxdites extrémités 27, 27' de l'arbre 26. Les extrémités 27, 27' de l'arbre 26 sont par exemple de forme aplatie. Les embouts dentelés 28, 28' comportent chacun un pion 30, 30' présentant une forme cylindrique, sensiblement cylindrique ou équivalent, monté libre en rotation dans l'orifice 19, 19' formé dans les jambes arrière 1, 1', dans les blocs de liaison 8, 8' par exemple, afin de supporter l'arbre 26, de part et d'autre.

Les embouts dentelés 28, 28' présentent des dents destinées à coopérer avec des crémaillères 17, 17' formés sur les éléments de blocage 11, 11' de sorte à transmettre le mouvement entre les éléments de blocage 11, 11' et l'arbre 26. Les éléments de blocage 11, 11' présentent une fenêtre 16, 16' de forme sensiblement ovale s'étendant sensiblement selon l'axe de translation des moyens de blocage permettant le passage des embouts 28, 28' au travers des éléments de blocage 11, 11'. Les crémaillères 17, 17' sont formées sur les faces intérieures latérales de la fenêtre 16, 16'.

Les embouts dentelés 28, 28' comportent sur une partie de leur pourtour des dents en prise avec une crémaillère 17, 17'. Ainsi, lorsqu'un des éléments de blocage 11, 11' est déplacé entre sa position de libération et sa position de blocage de roue, la translation de l'élément de blocage 11, 11' entraîne la rotation de l'arbre 26 autour de son axe. De l'autre côté, la rotation de l'arbre 26 entraîne simultanément le coulissement de l'autre élément de blocage 11, 11' entre sa position de libération et sa position de blocage.

On notera que la cinématique de transmission du mouvement entre les éléments de blocage 11, 11' est complètement réversible, c'est-à-dire que le mouvement de l'un des éléments de blocage 11, 11', quel qu'il soit, vers l'une ou l'autre de ses positions, entraîne le mouvement de l'autre élément de blocage 11, 11' vers cette position.

Avantageusement, l'arbre 26 de transmission du mouvement est logé à l'intérieur de la traverse 5. Ainsi, l'arbre de transmission 26 reste caché et protégé de toute détérioration lors de la manipulation de la poussette, notamment lors du passage d'obstacles tels que des trottoirs, ou lorsque l'utilisateur pose un pied sur la traverse 5 afin de faciliter le basculement vers l'arrière de la poussette.

Dans le mode de réalisation représenté, les éléments d'actionnement 9, 10 sont montés mobiles en rotation sur les jambes arrière 1, 1'. Pour ce faire, les éléments d'actionnement 9, 10 sont équipés d'un axe de rotation 23, 23' traversant un orifice 20, 20' formé à l'extrémité inférieure des jambes arrière 1, 1' de sorte à permettre le pivotement desdits éléments d'actionnement 9, 10 autour desdits axes de rotation 23, 23'. Les orifices sont ici directement formés dans les pièces de liaison 8, 8'.

Afin d'entraîner les éléments de blocage 11, 11', les éléments d'actionnement 9, 10 sont équipés d'un pion 24, 24', formé d'un rivet par exemple, traversant des alésages 15, 15' formés dans les éléments de blocage 11, 11'. Les alésages 15, 15' s'étendent perpendiculairement à la translation des éléments de blocage 11, 11'. Ainsi, lors de la rotation des éléments d'actionnement 9, 10, le pion 24, 24' exerce une pression sur l'élément de blocage 11, 11' de sorte à assurer sa translation. Les extrémités inférieures des jambes arrière 1, 1' présentent de part et d'autre des alésages 21, 21' de forme arquée guidant le mouvement du pion 24, 24'. Les alésages 21, 21' de forme arquée sont ici formés dans les blocs de liaison 8, 8'.

Dans un autre mode de réalisation (non représenté), on obtient le même effet si l'élément de blocage 11, 11' est équipé d'un pion 24, 24' coopérant avec un alésage 15, 15' situé dans les éléments d'actionnement 9, 10. Dans ce cas, les alésages 21, 21' formés dans les blocs de liaison 8, 8' pour guider ce pion 24, 24' sont de forme rectiligne.

On notera que la transmission du mouvement entre l'élément d'actionnement 9 et l'élément de blocage 11 est également réversible, c'est à dire que d'une part le mouvement de l'élément d'actionnement 9 de sa position haute vers sa position basse entraîne le mouvement de l'élément de blocage 11 entre sa position de libération et sa position de blocage de roues et que, d'autre part, le mouvement de l'élément de blocage 11 de sa position de blocage de roues vers sa position de libération entraîne le mouvement de l'élément d'actionnement 9 de sa position basse vers sa position haute. De même, la transmission du mouvement entre l'élément d'actionnement 10 et l'élément de blocage 11' est réversible, c'est à dire que d'une part le mouvement de l'élément d'actionnement 10 de sa position haute vers sa position basse entraîne le mouvement de l'élément de blocage 11' entre sa position de blocage de roues et sa position de libération et que, d'autre part, le mouvement de l'élément de blocage 11' de sa position de libération vers sa position de blocage de roues entraîne le mouvement de l'élément d'actionnement 10 de sa position basse vers sa position haute.

On remarque également que le sens de rotation des éléments d'actionnement 9, 10 est inversé. Pour ce faire, les axes de rotation 23, 23' des pédales sont répartis de part et d'autre du plan dans lequel coulissent les éléments de blocage 11, 11'. Par conséquent, si le premier élément d'actionnement 9 ou pédale de verrouillage pivote dans le sens horaire pour entraîner les éléments de blocage 11, 11' de leur position de libération vers leur position de blocage de roue, le second élément d'actionnement 10 pivotera dans le sens anti-horaire lors de cette opération.

Ainsi, le premier élément d'actionnement 9 est mobile de sa position haute vers sa position basse pour déplacer le premier élément de blocage 11 de sa position de libération vers sa position de blocage et le second élément 10 d'actionnement est mobile de sa position haute vers sa position basse pour déplacer le second élément de blocage 11' de sa position de blocage vers sa position de libération.

Par conséquent, l'utilisateur pourra simultanément déplacer les éléments de blocage 11, 11' vers leur position de blocage ou vers leur position de libération en exerçant une pression du haut vers le bas respectivement sur la pédale de verrouillage 9 ou la pédale de déverrouillage 10. Les manipulations du système de freinage selon l'invention sont donc particulièrement simples, et ne risquent pas de blesser le pied ou la chaussure de l'utilisateur.

Par ailleurs, les roues arrière 2, 2' sont équipées respectivement d'un axe 12, 12' monté perpendiculairement aux jantes crantées 3, 3'. Ces axes 12, 12' sont munis d'une gorge torique 13, 13' permettant la fixation des roues arrière 2, 2' à l'extrémité inférieure des jambes arrière 1, 1' sur les blocs de liaison 8, 8'. Pour ce faire, les blocs de liaison 8, 8' présentent des orifices 18, 18' permettant le passage des axes des roues. En outre, dans le mode de réalisation représenté, les axes 12, 12' des roues passent au travers des fenêtres 16, 16' des éléments de blocage 11, 11'.

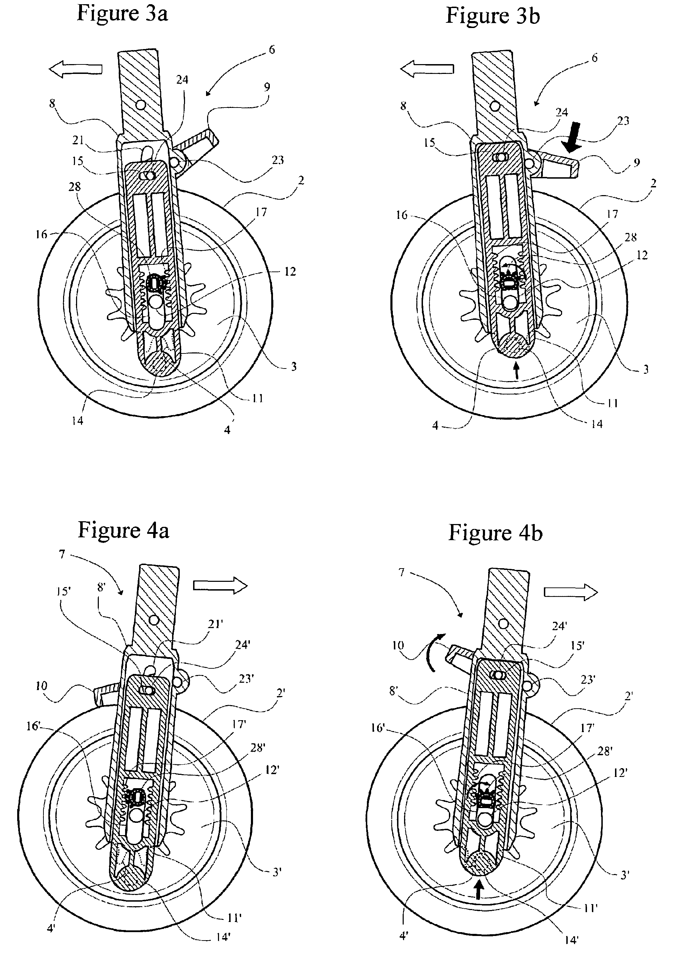

Avantageusement, dans un mode de réalisation non représenté, le système de freinage comporte en outre au moins un dispositif de sûreté permettant d'éviter un verrouillage ou un déverrouillage intempestif. Un tel dispositif doit offrir la résistance nécessaire pour maintenir le dispositif de verrouillage 6 et le dispositif de déverrouillage 7 alternativement en position de libération (Figures 3a et 4a) et de blocage (Figures 3b et 4b), sans empêcher les opérations de verrouillage et de déverrouillage lorsque l'utilisateur exerce une pression suffisante sur la pédale de verrouillage 9 ou la pédale de déverrouillage 10. À titre d'exemple, ce mécanisme peut être un mécanisme à cliquet, immobilisant soit les moyens de blocage 11, 11', soit les pédales 9, 10, par rapport aux blocs de liaison 8, 8'.

Les figures 3a et 3b illustrent le fonctionnement détaillé du système de freinage au niveau de la première jambe arrière 1 alors que les figures 4a et 4b illustrent le fonctionnement détaillé du système de freinage au niveau de la seconde jambe arrière 1'.

Lorsque le système de freinage est en position de libération, la pédale de verrouillage 9 est en position haute, ou relevée, et le moyen de blocage 11 est en position basse de libération. Dans cette position, les dents de l'embout dentelé 28 coopèrent avec la crémaillère 17 du moyen de blocage 11.

Lorsque l'utilisateur exerce avec le pied une pression verticale de haut en bas sur la pédale de verrouillage 9 (Figure 3b), la pédale de verrouillage 9 bascule vers le bas autour de son axe de rotation 23, entraînant la translation du moyen de blocage 11 vers le haut jusqu'à sa position de blocage de roue par coulissement à l'intérieur du bloc de liaison 8. Le doigt 14 de verrouillage s'engage alors dans un cran 4 de la jante crantée 3 de sorte à bloquer la rotation de la roue 2. De manière simultanée, la translation de l'élément de blocage 11 entraîne la rotation de l'arbre 26 sous l'effet de la coopération entre l'embout dentelé 28 et la crémaillère 17.

En position de libération (Figure 4a), le moyen de blocage 11' est en position basse, et par conséquent la pédale de déverrouillage 10 est en position abaissée. Dans cette position, l'embout dentelé 28' est positionné de manière à être en contact avec la crémaillère 17'.

Tel qu'illustré sur la Figure 4b, lorsque l'utilisateur exerce avec le pied une pression verticale de haut en bas sur la pédale de verrouillage 9 (Figure 3b), ceci produit alors la rotation de l'arbre 26, comme expliqué précédemment, entraînant une translation de l'élément de blocage 11' vers le haut en coulissant à l'intérieur du bloc de liaison 8' sous l'effet de la rotation de l'embout dentelé 28' coopérant avec la crémaillère 17'. Le doigt 14' de verrouillage s'engage alors dans un cran 4' de la jante crantée 3' de sorte à bloquer la rotation de la roue 2'. Sous l'effet du pion 24', la pédale de déverrouillage 10 bascule vers le haut autour de l'axe de rotation 23'.

À l'inverse, le déverrouillage du dispositif de frein s'effectue en exerçant avec le pied une pression verticale de haut en bas sur la pédale de déverrouillage 10, à partir de la position illustrée en Figure 4b. Ceci produit simultanément les effets suivants :
- la pédale de déverrouillage 10 bascule vers le bas autour de l'axe de rotation 23' ;
- sous l'effet du pion 24', l'élément de blocage 11' effectue une translation vers le bas en coulissant à l'intérieur du bloc de liaison 8';
- le doigt de verrouillage 14' se dégage des crans 4', permettant à nouveau la rotation la roue 2' ;
- l'embout dentelé 28' tourne sur son axe, et entraîne en rotation l'arbre de transmission 26 ;
- sous l'effet de la rotation de l'embout dentelé 28, le moyen de blocage 11 effectue une translation vers le bas en coulissant à l'intérieur du bloc de liaison 8, dégageant ainsi le doigt de verrouillage 14 des crans 4, permettant à nouveau la rotation la roue 2 ; et
- sous l'effet du pion 24, la pédale de verrouillage 9 bascule vers le haut autour de l'axe de rotation 23.

À la fin de cette opération, le système de freinage se trouve donc à nouveau dans les positions illustrées respectivement par les figures 3a et 4a.

Le mode de réalisation qui vient d'être décrit présente en outre l'avantage de pouvoir être verrouillé aussi bien que déverrouillé par une simple pression du pied de haut en bas, ce qui permet d'éviter tout risque d'endommager la chaussure ou de blesser le pied de l'utilisateur lors de cette dernière opération.

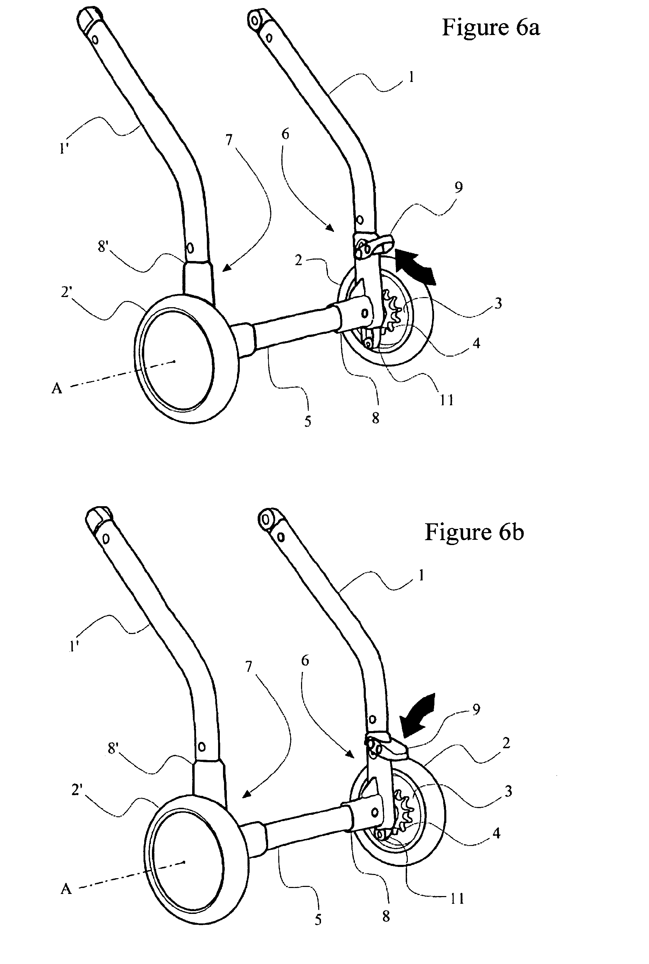

Les figures 6a et 6b illustrent le fonctionnement général d'un système de freinage selon un deuxième mode de réalisation de l'invention et représentent le train arrière d'une poussette pour enfant, équipée d'un tel système, vu en perspective arrière.

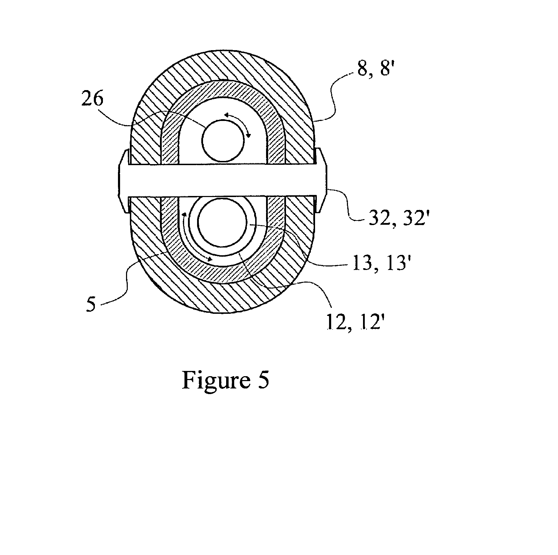

Ce mode de réalisation est identique à celui décrit dans les figures 1 à 5, à ceci près que le deuxième élément d'actionnement 10 a été supprimé. C'est donc le premier élément d'actionnement 9 qui est actionné à la fois pour verrouiller ou déverrouiller le système de freinage. En effet, la chaîne cinématique de transmission du mouvement étant toujours complètement réversible, le mouvement de l'élément d'actionnement 9 vers sa position basse (Figure 6b) entraîne le mouvement simultané des deux éléments de blocage 11, 11' vers leur position de blocage, et à l'inverse le mouvement de l'élément d'actionnement 9 vers sa position haute (Figure 6a) entraîne le mouvement simultané des deux éléments de blocage 11, 11' vers leur position de libération.

Ce deuxième mode de réalisation ne permet pas que le déverrouillage s'effectue comme le verrouillage par une pression de haut en bas sur une deuxième pédale, mais il offre l'avantage de nécessiter encore moins de pièces.

Ainsi, grâce à l'invention qui vient d'être décrite, il est possible de disposer d'un système de freinage fiable et robuste, nécessitant un nombre limité de pièces et un montage simple, sans ressort ni câble, et qui n'encombre pas l'espace entre les roues arrière. Ce dispositif présente en outre l'avantage de permettre un positionnement du ou des éléments d'actionnement au-dessus de l'axe A des roues 2, 2', donc à une hauteur suffisante pour être aisément accessibles par le pied de l'utilisateur.

On notera notamment que ce type de système de freinage peut s'adapter aisément à d'autres types de chariots autoporteurs à roulettes.

## Revendications

1. Système de freinage pour poussette présentant au moins une première (1) et une seconde (1') jambes arrière munies chacune d'au moins une roue, ledit système comportant :
- un premier (11) et un second (11') éléments de blocage montés coulissants, respectivement sur la première (1) et la seconde (1') jambes, entre une position de blocage de roue et une position de libération ;
- un premier élément d'actionnement (9) monté mobile sur la première jambe (1) entre une position haute et une position basse et coopérant avec le premier élément (11) de blocage de telle sorte que le mouvement dudit premier élément d'actionnement (9) de sa position haute vers sa position basse déplace le premier élément (11) de blocage de sa position de libération vers sa position de blocage, et qu'à l'inverse le mouvement dudit premier élément d'actionnement (9) de sa position basse vers sa position haute déplace le premier élément (11) de blocage de sa position de blocage vers sa position de libération ;
- des moyens de transmission du mouvement agencés pour entraîner simultanément le second élément (11') de blocage vers sa position de blocage lors du mouvement du premier élément (11) de blocage vers sa position de blocage et entraîner simultanément le second élément (11') de blocage vers sa position de libération lors du mouvement du premier élément (11) de blocage vers sa position de libération ; ledit système étant **caractérisé en ce que** lesdits moyens de transmission du mouvement comportent un arbre (26) mobile en rotation et des organes de transmission (17, 17') du mouvement, portés par les éléments de blocage (11, 11'), en prise avec ledit arbre (26) mobile en rotation.

2. Système de freinage selon la revendication 1, **caractérisé en ce qu'**il comporte un second élément d'actionnement (10) monté mobile sur la seconde jambe (1') entre une position haute et une position basse et coopérant avec le second élément (11') de blocage de telle sorte que le mouvement dudit second élément d'actionnement (10) de sa position haute vers sa position basse déplace le second élément de blocage (11') de sa position de blocage vers sa position de libération, lesdits moyens de transmission du mouvement étant agencés pour entraîner simultanément le premier élément de blocage (11) vers sa position de libération lors du mouvement du second élément (11') de blocage vers sa position de libération.

3. Système de freinage selon la revendication 2, **caractérisé en ce que** les premier (9) et second (10) éléments d'actionnement coopèrent de manière réversible respectivement avec le premier (11) et le second (11') élément de blocage de telle sorte que le mouvement du premier élément (11) de blocage vers sa position de libération entraîne le mouvement du premier élément d'actionnement (9) vers sa position haute et que le mouvement du second élément (11') de blocage vers sa position de blocage de roue entraîne le mouvement du second élément d'actionnement (10) vers sa position haute.

4. Système de freinage selon la revendication 1, **caractérisé en ce qu'**il ne comporte qu'un unique élément d'actionnement (9).

5. Système de freinage selon l'une quelconque des revendications 1 à 4, **caractérisé en ce que** les organes de transmission du mouvement sont des crémaillères (17, 17') coopérant avec un embout dentelé (28, 28') solidaire de l'arbre (26).

6. Système de freinage selon l'une quelconque des revendications 1 à 5, **caractérisé en ce que** les éléments de blocage (11, 11') sont montés coulissants à l'intérieur des jambes arrière (1, 1').

7. Système de freinage selon l'une quelconque des revendications 1 à 6, **caractérisé en ce que** le premier élément d'actionnement (9) est monté en rotation sur la première jambe (1) et comporte un alésage coopérant avec un pion situé sur le premier élément de blocage (11) ou porte un pion (24) mobile dans un alésage (15) formé dans le premier élément de blocage (11).

8. Système de freinage selon l'une des revendications 1 à 7, **caractérisé en ce que** les roues (2, 2') sont chacune équipées d'une jante crantée (4, 4') fixée sur la roue (2, 2') et **en ce que** les éléments de blocage (11, 11') comportent chacun un doigt (14, 14') agencé pour s'engager dans un cran de la jante crantée (4, 4') de sorte à bloquer la rotation de la roue (2, 2'), lorsque l'élément de blocage (11, 11') est dans sa position de blocage.

9. Système de freinage selon la revendication 8, **caractérisé en ce que** les doigts de verrouillage (14, 14') sont agencés pour coulisser suivant un axe radial par rapport à celui des roues (2, 2').

10. Système de freinage selon l'une des revendications 1 à 9, **caractérisé en ce que** l'arbre (26) mobile en rotation est positionné à l'intérieur d'une traverse connectant la première (1) et la seconde (1') jambes arrière.

11. Système de freinage selon l'une des revendications 1 à 10, **caractérisé en ce que** le premier (11) et le second (11') éléments de blocage sont des pièces identiques.

12. Poussette **caractérisée en ce qu'**elle est équipée d'un système de freinage selon l'une des revendications 1 à 11.

## Patentansprüche

1. Bremssystem für einen Handwagen, der mindestens ein erstes (1) und ein zweites (1') hinteres Bein aufweist, die jeweils mit mindestens einem Rad versehen sind, wobei das System umfasst:
- ein erstes (11) und ein zweites (11') Feststellungselement, die gleitend auf dem ersten (1) bzw. zweiten (1') Bein zwischen einer Feststellungsposition des Rades und einer Freigabeposition montiert sind;
- ein erstes Betätigungselement (9), das beweglich auf dem ersten Bein (1) zwischen einer oberen Position und einer unteren Position montiert ist und mit dem ersten Feststellungselement (11) derart zusammenwirkt, dass die Bewegung des ersten Betätigungselements (9) von seiner oberen Position in seine untere Position das erste Feststellungselement (11) von seiner Freigabeposition in seine Feststellungsposition verschiebt, und dass umgekehrt die Bewegung des ersten Betätigungselements (9) von seiner unteren Position in seine obere Position das erste Feststellungselement (11) von seiner Feststellungsposition in seine Freigabeposition verschiebt;
- Mittel zur Übertragung der Bewegung, die derart angeordnet sind, um gleichzeitig das zweite Feststellungselement (11') in seine Feststellungsposition bei der Bewegung des ersten Feststellungselements (11) in seine Feststellungsposition anzutreiben, und gleichzeitig das zweite Feststellungselement (11') in seien Freigabeposition bei der Bewegung des ersten Feststellungselements (11) in seine Freigabeposition anzutreiben;
wobei das System **dadurch gekennzeichnet ist, dass** die Bewegungsübertragungsmittel eine drehbewegliche Welle (26) und Bewegungsübertragungselemente (17, 17'), die von den Feststellungselementen (11, 11') getragen werden, umfassen, die mit der drehbeweglichen Welle (26) ein Eingriff sind.

2. Bremssystem nach Anspruch 1, **dadurch gekennzeichnet, dass** es ein zweites Betätigungselement (10) umfasst, das beweglich auf dem zweiten Bein (1') zwischen einer oberen Position und einer unteren Position montiert ist und mit dem zweiten Feststellungselement (11') zusammenwirkt, so dass die Bewegung des zweiten Betätigungselements (10) von seiner oberen Position in seine untere Position das zweite Feststellungselement (11') von seiner Feststellungsposition in seine Freigabeposition verschiebt, wobei die Bewegungsübertragungsmittel derart angeordnet sind, dass sie gleichzeitig das erste Feststellungselement (11) in seine Freigabeposition bei der Bewegung des zweiten Feststellungselements (11') in seine Freigabeposition antreiben.

3. Bremssystem nach Anspruch 2, **dadurch gekennzeichnet, dass** das erste (9) und das zweite (10) Betätigungselement auf reversible Weise mit dem ersten (11) bzw. dem zweiten (11') Feststellungselement zusammenwirken, so dass die Bewegung des ersten Feststellungselements (11) in seine Freigabeposition die Bewegung des ersten Betätigungselements (9) in seine obere Position bewirkt, und dass die Bewegung des zweiten Feststellungselements (11') in seine Radfeststellungsposition die Bewegung des zweiten Betätigungselements (10) in seine obere Position bewirkt.

4. Bremssystem nach Anspruch 1, **dadurch gekennzeichnet, dass** es nur ein einziges Betätigungselement (9) umfasst.

5. Bremssystem nach einem der Ansprüche 1 bis 4, **dadurch gekennzeichnet, dass** die Bewegungsübertragungsmittel Zahnstangen (17, 17') sind, die mit einem gezahnten Ansatz (28, 28'), der mit der Welle (26) verbunden ist, zusammenwirken.

6. Bremssystem nach einem der Ansprüche 1 bis 5, **dadurch gekennzeichnet, dass** die Feststellungselemente (11, 11') gleitend innerhalb der hinteren Beine (1, 1') montiert sind.

7. Bremssystem nach einem der Ansprüche 1 bis 6, **dadurch gekennzeichnet, dass** das erste Betätigungselement (9) drehbar auf dem ersten Bein (1) montiert ist und eine Bohrung umfasst, die mit einem Stift zusammenwirkt, der sich auf dem ersten Feststellungselement (11) befindet, oder einen Stift (24) trägt, der in einer Bohrung (15) beweglich ist, die in dem ersten Feststellungselement (11) ausgebildet ist.

8. Bremssystem nach einem der Ansprüche 1 bis 7, **dadurch gekennzeichnet, dass** die Räder (2, 2') jeweils mit einer Felge (4, 4') mit Kerben, die auf dem Rad (2, 2') befestigt ist, versehen sind, und dass die Feststellungselemente (11, 11') jeweils einen Finger (14, 14') umfassen, der derart vorgesehen ist, dass er in eine Kerbe der Felge (4, 4') mit Kerben eingreift, um die Drehung des Rades (2, 2') festzustellen, wenn sich das Feststellungselement (11, 11') in seiner Feststellungsposition befindet.

9. Bremssystem nach Anspruch 8, **dadurch gekennzeichnet, dass** die Verriegelungsfinger (14, 14') derart vorgesehen sind, dass sie entlang einer Radialachse in Bezug zu jener der Räder (2, 2') gleiten.

10. Bremssystem nach einem der Ansprüche 1 bis 9, **dadurch gekennzeichnet, dass** die drehbewegliche Welle (26) innerhalb einer Querstrebe positioniert ist, die das erste (1) und zweite (1') hintere Bein verbindet.

11. Bremssystem nach einem der Ansprüche 1 bis 10, **dadurch gekennzeichnet, dass** das erste (11) und zweite (11') Feststellungselement identische Teile sind.

12. Handwagen, **dadurch gekennzeichnet, dass** er mit einem Bremssystem nach einem der Ansprüche 1 bis 11 ausgestattet ist.

## Claims

1. A brake system for a stroller including at least a first (1) and a second (1') rear legs, each one fitted with at least one wheel, the system comprising:
- a first (11) and a second (11') blocking elements, slidably mounted respectively on the first (1) and the second (1') legs, between a wheel blocking position and a disengaged position;
- a first operating element (9), movably mounted on the first leg (1), between a high and a low position, and cooperating with the first blocking element (11), so that the movement of said first operating element (9) from its high position to its low position displaces the first blocking element (11) from its disengaged position to its blocking position, and so that conversely, the movement of said first operating element (9) from its low position to its high position displaces the first blocking element (11) from its blocking position to its disengaged position; and
- movement transmission means configured to simultaneously cause the second blocking element (11') to move to its blocking position when the first blocking element (11) moves to its blocking position, and to simultaneously cause the second blocking element (11') to move to its disengaged position when the first blocking element (11) moves to its disengaged position;
the system being **characterized in that** said movement transmission means comprise a rotating shaft (26) and movement transmission organs (17, 17'), borne by the blocking elements (11, 11'), in gear with said rotating shaft (26).

2. A brake system according to claim 1, **characterized in that** it comprises a second operating element (10) movably mounted on the second leg (1') between a high position and a low position and cooperating with the second blocking element (11'), so that the movement of said second operating element (10) from its high position to its low position displaces the second blocking element (11') from its blocking position to its disengaged position, said movement transmission means being designed to cause simultaneously the first blocking element (11) to move to its disengaged position while the second blocking element (11') moves to its disengaged position.

3. A brake system according to claim 2, **characterized in that** the first (9) and the second (10) operating elements cooperate reversibly, respectively with the first (11) and the second (11') blocking elements, so that the movement of the first blocking element (11) to its disengaged position causes the first operating element (9) to move to its high position, and so that the movement of the second blocking element (11') to its wheel blocking position causes the second operating element (10) to move to its high position.

4. A brake system according to claim 1, **characterized in that** it comprises only a single operating element (9).

5. A brake system according to any one of claims 1 to 4, **characterized in that** the movement transmission organs are toothed racks (17, 17') cooperating with a toothed tip (28, 28') in gear with the shaft (26).

6. A brake system according to any one of claims 1 to 5, **characterized in that** the blocking elements (11, 11') are slidably mounted inside the rear legs (1, 1').

7. A brake system according to any one of claims 1 to 6, **characterized in that** the operating element (9) is rotatably mounted on the first leg (1), and bears a runner cooperating with a pin located on the first blocking element (11), or bears a pin (24) moveable inside a runner (15) built into the first blocking element (11).

8. A brake system according to one of claims 1 to 7, **characterized in that** each of the wheels (2, 2') is equipped with a notched rim (4, 4') fixed to the wheel (2, 2'), and **in that** each of the blocking elements (11, 11') includes a peg (14, 14') designed to fit into a notch of the notched rim (4, 4'), so that it blocks the rotation of the wheel (2, 2'), when the blocking element (11, 11') is in its blocking position.

9. A brake system according to claim 8, **characterized in that** the locking pegs (14, 14') are arranged to slide along an axis radial to the axis of the wheels (2, 2').

10. A brake system according to one of claims 1 to 9, **characterized in that** the rotating shaft (26) is positioned inside a crossbar connecting the first (1) and the second (1') rear legs.

11. A brake system according to one of claims 1 to 10, **characterized in that** the first (11) and the second (11') blocking elements are identical parts.

12. A stroller, **characterized in that** it is equipped with a brake system according one of claims 1 to 11.
